# EUROPEAN PATENT SPECIFICATION

(11) **EP 2 426 505 B1**
(45) Date of publication and mention of the grant of the patent: **02.01.2013**
(21) Application number: 10290474.5
(22) Date of filing: 06.09.2010
(51) Int. Cl.: G01S 5/14, H04W 64/00

(54) **Localization of mobile terminals in a radio network**
Ortung von mobilen Endgeräten in einem Funknetzwerk
Localisation de terminaux mobiles dans un réseau radio

(43) Date of publication of application: 07.03.2012
(73) Proprietor: Alcatel Lucent, 75007 Paris (FR)
(72) Inventor: Karla, Ingo, 46514 Schermbeck (DE); MacDonald, William, 08833 Lebanon, NJ (US)
(74) Representative: Wetzel, Emmanuelle

(56) References cited:
- WO-A1-92/05672
- WO-A1-97/27711
- WO-A1-99/27735
- WO-A1-99/29130
- WO-A2-2008/008685
- GB-A- 2 280 327
- US-B1- 6 353 744
- MCGUIRE M ET AL: "Location of mobile terminals using time measurements and survey points", IEEE TRANSACTIONS ON VEHICULAR TECHNOLOGY, IEEE SERVICE CENTER, PISCATAWAY, NJ, US, vol. 52, no. 4, 1 July 2003 (2003-07-01), pages 999-1011, XP011100117, ISSN: 0018-9545, DOI: DOI:10.1109/TVT.2003.814222

## Description

### Field of the Invention

The invention relates to the field of telecommunications, and, more specifically, to localization of mobile terminals in radio (access) networks.

### Background

This section introduces aspects that may be helpful in facilitating a better understanding of the invention. Accordingly, the statements of this section are to be read in this light and are not to be understood as admissions about what is in the prior art or what is not in the prior art.

Localization, i.e. position detection, of mobile terminals is getting more and more important, both on the application side and also for network management reasons. In particular, localization information may lead to a large performance advantage in the network management and for algorithms in self organizing networks, SON, such as e.g. LTE (advanced).

Moreover, business models in telecommunication networks are no longer restricted to only providing a telephone or data connection, as more and more money is generated by applications, especially by services for which the user is paying some money. Being able to localize the position of any user of a mobile cellular network allows to enable many kinds of new applications, services and novel ways to exploit.

In the present approach for managing location information, all the location information is contained in a centralized server and all requests for location information must be routed through that centralized location server. In other words, the information about the position of a mobile (if known or as far as known) is stored in a central entity. The problems with this solution are as follows:
1) The major drawback of the centralized system is that there can be a latency of up to tens of seconds for the location server to provide the location information to the client. For network management tasks, like e.g. when the location information is required for handover assistance, this latency would be about a factor of one hundred too long. Thus, a central server based solution is not possible for many network management applications, as the delays are much too long.
2) Transmitting localization signalling messages to a central server creates a large signalling load.
3) Centralized localization is well suited for applications such as navigation since only a fraction of the users will be using such an application at any given time. However, for network management applications it is likely that the location of all the active mobiles will be of interest possibly generating more signalling and data traffic than the centralized server could manage.
4) Network operators request -wherever possible- distributed solutions, i.e. self organizing network solutions, where as much functionality is handled directly inside the network without any centralized server.
5) Ensuring Privacy: Localization via a centralized server always involves the risk that the position of a mobile terminal in connection with a mobile identification -which can clearly be attributed to a particular user- is transmitted over the network to this server. Many people do not feel comfortable when they have the impression of being always "tracked and observed". Thus, privacy concerns are a major issue, which prevent many people to use such terminals, networks or applications. Therefore, a localization solution is required which ensures the users' privacy and which does not generate and distribute non-necessary user related localization data.

In summary, it is advantageous for network optimization applications if localization information is available locally. It would be even better if the localization information were calculated locally and if it were anonymous. For handover optimization and other network management tasks the network does not need to know who owns the mobile - only that there is a mobile to manage. Also, a distributed localization network has many advantages, one important advantage being that latency will be reduced.

Therefore, there is a need for a solution which avoids the signalling load in the network and which generates and uses the localization information where this information is needed - i.e. only in the relevant cell(s) of the Radio Access Network. Such a solution would be particularly advantageous for a distributed (SON) network, as a distributed network by its very nature lacks centralized control. There are inevitably coordination and scheduling challenges that must be overcome, as such networks need to obtain and generate themselves a knowledge base based on which they organize, configure and optimize their system.

For instance, in self organizing networks, it is the aim that a newly installed cell is only switched on and that the cell and the network organize all required tasks without an operator having to manually teach the cell its local surrounding. In other words, the network shall generate its knowledge itself, i.e. the SON system needs to gain (or would benefit from) some intelligence which formerly had to be put manually into the system via human controlled planning and configuration.

Regarding a technical solution for the localization of mobile terminals in a SON or other type of radio network, there exists satellite based localisation (e.g. GPS), but
1) Generally, GPS does not work indoors.
2) GPS measurements need a lot of energy, which considerably reduce the battery life of the mobile terminal
3) Only a part of the mobile terminals are equipped with GPS (and/or may have their GPS switched off), and
4) A GPS localization measurement may take few or some seconds, and this delay is not acceptable for SON network management tasks.

Therefore, GPS can only be used for some of the mobile terminals outdoor and is limited to some applications, but it is in general not suitable for SON network management tasks (e.g. when all mobiles are needed to be located very quickly or continuously tracked).

Thus, there is a need for a technical solution enabling the coordination of the localization task inside a network without the need for any centralized entity.

A method for localizing mobile terminals in a radio network which comprises the features of the preamble of claim 1 is known from WO 2008/008685 A2.

GB 2 280 327 A discloses locating a mobile terminal using a location signal including identification information such as a telephone number. WO 92/05672 A1 discloses transmitting timing advace values with mobile station identities to a location unit.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

A first aspect of the invention relates to a method for localizing mobile terminals in a radio network, according to the features of claim 1.

In the way described above, the position of mobile terminals can be determined in a self organizing, autonomous and distributed way in a cluster of base stations of a radio access network without the need for a central entity or a central server. Thus, the solution is well suited for efficiently delivering localization information, for example for network management purposes. The localization cluster typically only includes base stations which are susceptible to detecting (and processing) the distance measuring signal, i.e. which are arranged in a local area typically centred about the serving base station.

It will be appreciated by those skilled in the art that the term "distance measuring signal" does not necessarily refer to a signal which is provided specifically for distance measurement purposes, but may refer to any signal based on which the distance of a mobile terminal to a base station can be determined. This determination can be done e.g. based on the modification of the received signal with time and/or on the measured run time. It will be appreciated by those skilled in the art that the term "signal" may also designate a code/pulse sequence, in particular a pseudo random (noise) sequence. For example, the distance measuring signal may be a "(Long) Zadoff-Chu Sequence". Other examples are gold codes which are used for GPS localization, or maximal length Pseudo Random Noise sequences which are used in CDMA.

In the way described above, a solution is provided where all localization data are created in an anonymized way and preserved only inside the radio access network so that it can be ensured that no user identifiable localization data is created - unless the user itself initiates an application for which the user wants to know his own position, or possibly e.g. if the police wants to localize a particular user in an emergency situation.

Moreover, the fast availability of position information is of very large advantage for intelligent SON algorithms for many different SON use cases, for example:
1) SON coverage + capacity management + coverage optimization needs to identify where coverage holes occur;
2) SON load balancing algorithms can be made much more powerful when they are able to consider the position of mobile terminals within their decision intelligence. For example, these algorithms may decide to which of the cells a mobile terminal in the border area between two cells is assigned to, and may thus largely benefit from having information about the position of the mobile terminal. Furthermore, the virtual creation of certain areas within which the cell load is determined does also benefit from the position knowledge of mobile terminals.
3) SON Handover algorithms do also benefit from knowing the position of the mobiles. For example, they may identify how urgent is the need to perform - or not to perform- a particular handover for a mobile terminal.
4) The SON system may also identify when a problem occurs at a certain area several times, so that the SON system may timely initiate adequate countermeasures to prevent occurrence of the same problem again when a mobile terminal approaches a problematic area.

All these and other network management tasks, e.g. managing resources such as radiated power, capacity, etc. need or largely benefit from knowing the position of a mobile terminal. The above approach ensures that the localization information will be available very quickly, i.e. with only very short delays.

As indicated above, the distance measuring signal comprises a code for distinguishing the distance measuring signal from distance measuring signals emitted by other mobile terminals to be localized. If the position of more than one single mobile terminal has to be determined at the same point of time, different "signal-codes" have to be used for the distance measuring signals of the different mobile terminals, so that the listening base stations can distinguish the distance measuring signals of different mobile terminals by their codes and can thus determine from which mobile terminal a particular distance measuring signal has been emitted. The code assignment is ideally performed in such a way that the distance measuring signal can be uniquely attributed to a particular mobile terminal. For this purpose, the serving base station may e.g. assign a particular code to a particular mobile terminal from a random pool of codes or the coding may be derived from a combination of an ID of the mobile terminal and an ID of the serving base station. As an alternative to the assignment of a code for each individual time slot by the base station, a pre-defined code may be used which is typically valid for more than one distance determination / time slot. As a further alternative, the mobile terminal itself my select a code and will inform the serving base station about the code that it intends to use.

The inventive method further comprises: in a base station, detecting a code conflict when receiving information indicating the same listening time or time slot and the same code from at least two serving base stations. Preferably, information about the code conflict is transferred from the base station to at least one of the serving base stations.

As indicated above, there are different signal codes which can be assigned to different mobile terminals to be localized, and it is intended that each mobile terminal uses a unique code. However, unless a complex self-organizing solution of inter-cell code management is used, it cannot be excluded that occasionally two different cells / serving base stations request two or more mobile terminals to emit an uplink signal with the same code at the same time. Thus, in general, it cannot be excluded that a code conflict may occur.

Consequently, algorithms inside the non-serving base stations and/or in the serving base stations may be provided which detect and possibly handle and resolve such code conflicts: As indicated above, a code conflict may be easily detected by a listening base station when it gets requested by two (or more) different serving base stations to listen to the same signal code at the same point of time or time slot. Then, the listening base station may inform these serving base stations about this code conflict and that it will not be able to measure at all (or not so precisely) the signal on this code. The serving base station(s) may then consider this information during their later position calculation for this mobile terminal. For example; the serving base stations may exclude this base station measurement from the position calculation and carry out the calculation only based on distance information received from other base stations. The serving base station may also e.g. assign a new code to this mobile terminal and let this mobile terminal emit its distance measuring signal again, e.g. at the next localisation time slot, hoping that the base station which previously detected the code conflict can now listen to the new code. As a simple realization, the serving base station may simply choose a new random code out of its pool of available codes.

Alternatively, the base station may remain silent (and e.g. simply ignore measuring the non-unique distance measuring signals). Obviously, this does not lead to as good a performance as when the conflict would be resolved, but the network localization procedure will still work - just with one base station less in the cluster for this particular mobile's localization.

In one variant, the method further comprises: transmitting information indicating a time or time slot for the emission of the distance measuring signal from the serving base station to the mobile terminal to be localized. The mobile terminal to be localized is served, i.e. controlled, by the serving base station. The base station decides which mobile terminals require localization.. The serving cell or base station prioritizes and assigns time slots for the localization event. For this purpose, the serving base station sends e.g. a protocol message to the mobile terminal(s) to be localized, requesting the mobile terminal(s) to emit at a precisely defined point of time or time-slot a particular uplink signal. In the present context, the term "time slot" refers to a time interval in general which does not have to correspond in its time duration / starting point to the length of time slots otherwise used in the radio access network.

In a further variant, the method comprises transferring information indicating a time or time slot for listening to the distance measuring signal of the mobile terminal from the serving base station to the other base stations of the localization cluster. The serving base station sends the information, e.g. in the form of a signalling message to the other base stations in its localization cluster to notify that a mobile terminal is going to emit a distance measuring signal (possibly including a particular signal-code, as explained further below) at a particular point of time or time-slot. The other base stations (together with the serving base station) will then listen to this signal code at this point of time / time interval.

During such a listening time interval, the base stations of the localization cluster may determine an arrival time, a power level, an angle-of-arrival, a shape of the distance measuring signal or a combination of these. If a specific base station is capable of detecting the distance measuring signal, the distance (and possibly also its error range) from the emitting mobile terminal to the antenna of that specific base station can be determined. The distance determination may e.g. be based on the modification of the signal shape with time, allowing to determine a time-of-flight and/or a time of arrival of the signal. This may be achieved e.g. by calculating an (auto-)correlation function of a pseudo random noise sequence which is used as a distance measuring signal. In this case, a peak of the (auto-) correlation function indicates the delay time and allows to determine the time-of-flight of the signal. Alternatively, for determining the time-of-flight of the signal, information about the emission time may provided by the serving base station. The distance determination may be done either in the non-serving base stations or alternatively in the serving base station; in the latter case, raw data about the received distance measuring signal which allows to calculate the respective distance has to be provided to the serving base station (see below).

In another embodiment, the method further comprises: selecting, by the serving base station, other base stations susceptible of receiving the distance measuring signal emitted by the mobile terminal to be localized in order to establish the localization cluster. The serving base station establishes a "localisation cluster" of several base stations within its local area. This localization cluster comprises all those other base stations of which the serving base station assumes that these other base stations may have a chance to receive the uplink distance measuring signal emitted by its particular mobile terminal. For example, this cluster could be established e.g. based on the known Neighbour Relation Tables (NRT), using all first and second order neighbour cells or base stations of the serving base station. Second order neighbours are the neighbours of (direct) neighbours of the serving base station. It will be understood that the "localization cluster" is base station specific (typically centred about the serving base station) and that each serving base station defines its own localization cluster.

As a further feature, there may be a self learning function established inside the serving base station about how to best establish a cluster; for instance, when after several attempts, a certain base station in the cluster has never been able to detect the signal, then the serving base station may exclude (for a certain amount of time) this particular other base station from its localization cluster.

In another variant, the method further comprises: transferring distance measuring information derived from the received distance measuring signals from the further base stations to the serving base station. The other base stations which have received the distance measuring signal report back to that serving base station which has previously requested to listen to this particular signal and code. The information attributed to that particular signal code may either be the distance (evaluated by the listening base stations) and/or some or all the raw received data of the distance measuring signal, like, e.g., arrival time, power level, angle of arrival and/or signal shape.

A further aspect of the invention relates to a base station, comprising the features of claim 8. The base station localizes the mobile terminal based on distance measuring information received from the other base stations and on distance measuring information which is derived from the distance measuring signal which is received by the base station itself. It will be appreciated that there may also be an internal communication in the base station, for example between a function for listening to / processing the distance measuring signal and the localization means. It will be understood that additional information about the distance to the mobile terminal which is present in the serving base station anyhow, e.g. based on SINR, path loss, signal quality, ... may be used in addition to the distance information derived from the distance measuring signal.

In this way, based on the received distances and/or based on the raw data and/or on additional information received from other cells, and also based on the known geographic positions of the other base station antennas, the localization means of the serving base station can determine the position -and the error range - of the localization of the mobile terminal which is to be localized, e.g. by using algorithms such as triangulation.

As indicated above, the inventive base station further comprises: transmission means for transmitting information indicating a time or time slot for the emission of the distance measuring signal to the mobile terminal to be localized. As indicated above, the serving base station may trigger the localization of one or more of its served mobile terminals by indicating a time or time interval for the emission of the distance measuring signal. Alternatively, the mobile terminals may e.g. periodically emit a distance measuring signal, or uplink signals containing data traffic emitted by the mobile terminals may be used to perform the distance measurement in the other base stations.

The inventive base station further comprises: a code creating means for assigning a code to the distance measuring signal in order to distinguish the distance measuring signal from distance measuring signals of other mobile terminals to be localized, the transmission means being adapted to transmit information about the code to the mobile terminal, typically together with information about the time or time slot for the localization. As indicated above, the code allows the base stations to identify distance measuring signals from different mobile terminals.

In a further embodiment, the base station further comprises: a transferring means for transferring information indicating a time or time slot for listening to the distance measuring signal of the mobile terminal to the other base stations of the localization cluster. In this way, the other base stations do not have to check continuously if a distance measuring signal has been emitted, but may limit the detection period to a listening time interval which is chosen based on the information about the time or time slot of the emission of the distance measuring signal from a particular mobile terminal.

In another embodiment, the base station further comprises: a determining means for determining a distance to a further mobile terminal not served by the base station, the determination being based on a distance measuring signal received from the further mobile terminal. As indicated above, not only does the base station define its own localization cluster for its served mobile terminals, the base station may typically also be part of one or more localization clusters of base stations which act as serving base stations for further mobile terminals which are not served by the base station itself. The base station may determine the distance to the mobile terminal based on one or more properties of received distance measuring signal, e.g. by calculating a time-of-flight. It will be appreciated that when the other base stations of the localization cluster only provide raw distance measuring data, the base station may use the determining means also for calculating the distance to mobile terminals which are served by the base station itself.

In one embodiment, the base station further comprises: a receiving means for receiving information indicating a time or time slot for listening to a distance measuring signal of a further mobile terminal which is not served by the base station. The base station uses the received information in order to determine a listening time interval which is to be used for listening to the distance measuring signal from a mobile terminal which is not served by the base station and possibly also for listening to distance measuring signals of its own (served) mobile terminals.

A further aspect relates to a radio (access) network comprising a plurality of base stations as described above. The radio network may be a distributed network without a central entity, and may in particular be devised as a SON network.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of a radio network with a centralized localization server,
- **Fig. 2**: shows an embodiment of a network according to the invention, implementing a distributed localization approach using a localization cluster,
- **Fig. 3**: shows an embodiment of a network according to the invention with two overlapping localization clusters, and
- **Fig. 4**: shows the dependence of a correlation (in dB) on delay for a Zadoff-Chu sequence used as a distance measuring signal.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

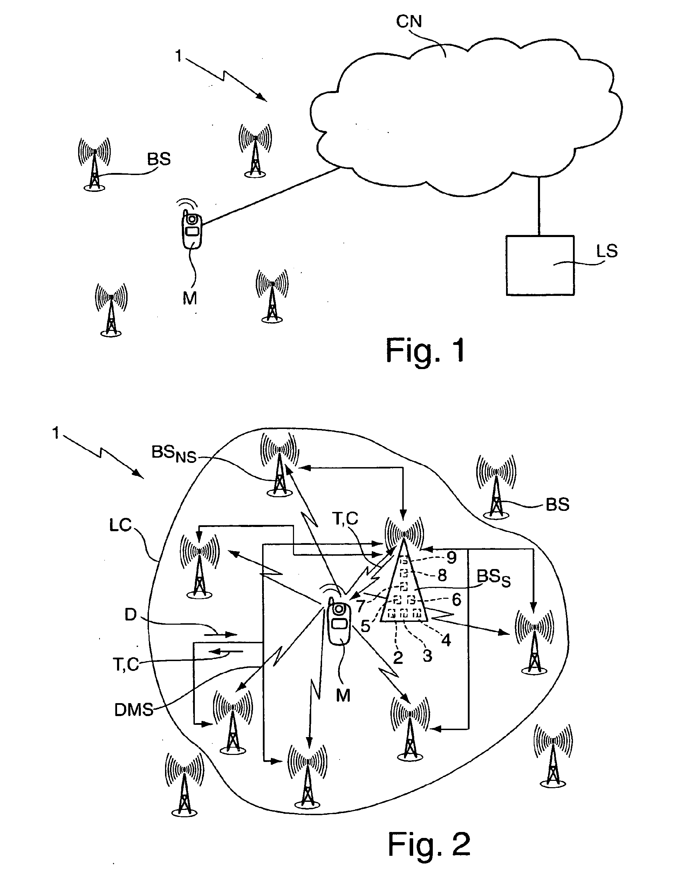

Existing localization architectures are intended to deliver location information to emergency management teams or to location based services. These applications typically rely on a centralized localization architecture like the one shown in **Fig. 1**. The radio network 1 shown therein has a plurality of base stations BS which serve a large number of mobile terminals M, only one of which is shown in Fig. 1 for the sake of simplicity. The mobile terminal M may receive localization information e.g. via a GPS system, and transmits the localization information to a centralized localization server LS via a core network CN. The centralized localization server LS depicted in Fig. 1 may e.g. serve the entire continental United States.

Generally, location determination methods like the one shown in Fig. 1 can be categorized in two main groups - uplink methods and downlink methods. Downlink methods rely on the mobile to make time-of-flight measurements from either ground based sources, such as base stations, or from satellite based sources such as GPS (as is the case with Fig. 1). The mobile terminal may either send the raw data back to the localization server for localization computation or calculate its location and forward the localization information to the server. In the uplink method, the mobile terminal emits a signal that is received by a coordinated network of receivers. The receivers then forward the time-of-flight information to a centralized server for localization computation. In either method, a trusted client can access location information from the location server by requesting the coordinates of a particular user.

However, the centralized architecture of Fig. 1 has several major drawbacks: First, the latency of a highly centralized localization network will deliver the required information with a considerable delay which is too long for many applications and too long for many network management tasks. As an example, if the mobile terminal M requests a handover to a base station that is at its capacity limit, the serving base station could, with knowledge of the mobile's location, direct it to handover to a different base station or not handover at all. In a centralized environment, the base station BS would have to request the location from the centralized server LS. If the location information is not up-to-date, the location server LS would request a localization session of the mobile terminal M. When the localization session has been completed, the location server LS sends the localization information to the serving base station BS. The entire process could take several tens of seconds. However, a typical handover is initiated and completed in e.g. about 0.5 seconds. In this scenario, the localization information provided by the centralized localization server LS would be useless.

Although one could consider subdividing the highly centralized network 1 into smaller centralized regions, this will not remove the latency described above, will not scale well, and will cause problems with localizing mobiles on the boundary between those regions.

The centralized approach also has a privacy issue: The base station BS must know the identity of the mobile terminal that it needs to localize. The identity is used to query the centralized server for the location information. However, the base station BS does not need to know the identity of the mobile terminal M, but only that there is a mobile terminal M to be localized.

In order to overcome the problems described above, a decentralized approach may be performed, using an (access) network 1 like the one depicted in **Fig. 2****.** In the network 1, a serving base station BSₛ which directs traffic to the mobile terminal M coordinates the localization of the mobile terminal M The localization information may be used in applications which are performed in the serving base station, like e.g. handover support, but the localisation information may also be transmitted elsewhere, to other base stations or to other entities inside the network or to the mobile terminal which runs an application requiring localization information (like e.g. a navigation software) etc.

In the example of Fig. 2, the information for localizing the mobile terminal M is derived from distance information D obtained by other, non-serving base stations BS_{NS} in a local area of base stations forming a localization cluster LC, as well as on distance information obtained by the serving base station BSₛ itself. The distance information D is provided by monitoring an uplink signal emitted from the mobile terminal M, the uplink signal allowing determining a distance to the base stations BS,_{S}, BS_{NS}, being thus referred to as a distance measuring signal DMS in the following.

This decentralized localization process will be explained in greater detail below:
First of all, the serving base station BS_{S} uses a generating means 2 for generating the localization cluster LC by selecting other base stations BS_{NS} susceptible to receiving the distance measuring signal DMS to be emitted by the mobile terminal M to be localized. For this purpose, the base station BS_{S} may use Neighbour Relation Tables (NRT), e.g. using all first and possibly all second order neighbour cells or base stations. It will be understood, however, that the localization cluster LC may also be modified dynamically using a self-learning algorithm, e.g. (temporally) excluding base stations BS which have not been able to detect the uplink signal several times.

For starting the localization process, the serving base station BS_{S} transmits information indicating a time or time slot T for the emission of the distance measuring signal DMS to the mobile terminal M to be localized. For this purpose, the serving base station BS_{S} comprises a transmission means 5 in the form of a transmitter (radio interface with antenna(s)), such that the information can be transmitted to the mobile terminal M e.g. using a signaling message.

The serving base station BS_{S} also contains a code assignment means 6 for assigning a code C to the distance measuring signal DMS of the mobile terminal M, aiming to distinguish the distance measuring signal DMS of that particular mobile terminal M from distance measuring signals of other mobile terminals (not shown). The code C may be e.g. a pseudo-random code and is also transmitted using the transmission means 5, typically in the same signaling message as the information about the time or time slot T for the emission. Alternatively, a pre-defined code may be used which is typically valid for more than one distance determination / time slot. As a further alternative, the mobile terminal itself my select a code and will inform the serving base station about the code that it intends to use.

The information about the time or time slot T and the code C is then also provided to the other base stations BS_{NS} of the localization cluster LC using a transferring means 7 for inter-cell communication, e.g. an X2-interface of the serving base station BS_{S} or a core network. The base stations BS_{S}, BS_{NS} use this information to set a listening time interval during which the non-serving base stations BS_{NS} and the serving base station BS_{S} will listen to the distance measuring signal DMS emitted by the mobile station M. The listening time interval may either correspond to the time or time slot T, or, alternatively, a delay time for the transmission of the distance measuring signal DMS may be taken into account.

During the listening time interval, the base stations BS_{S}, BS_{NS} of the localization cluster LC listen to at least one of an arrival time, a power level, an angle-of-arrival, and/or a shape of the distance measuring signal DMS. Each of the base stations BS_{S}, BS_{NS} may then, based on the modification of the distance measuring signal DMS with time and/or on the measured run time, determine a distance to the mobile terminal M.

One advantageous way how the distance can be determined is when the distance measuring signal DMS is a code/pulse sequence e.g. in the form of a pseudo random noise sequence, e.g. a Zadoff-Chu sequence. Such a pseudo random noise sequence may be formed either in the time domain or in the frequency domain. Zadoff-Chu sequences are formed in the frequency domain and are preferably used for distance measurements as they have reasonable correlation characteristic in the presence of Gaussian white noise and in the presence of multipath.

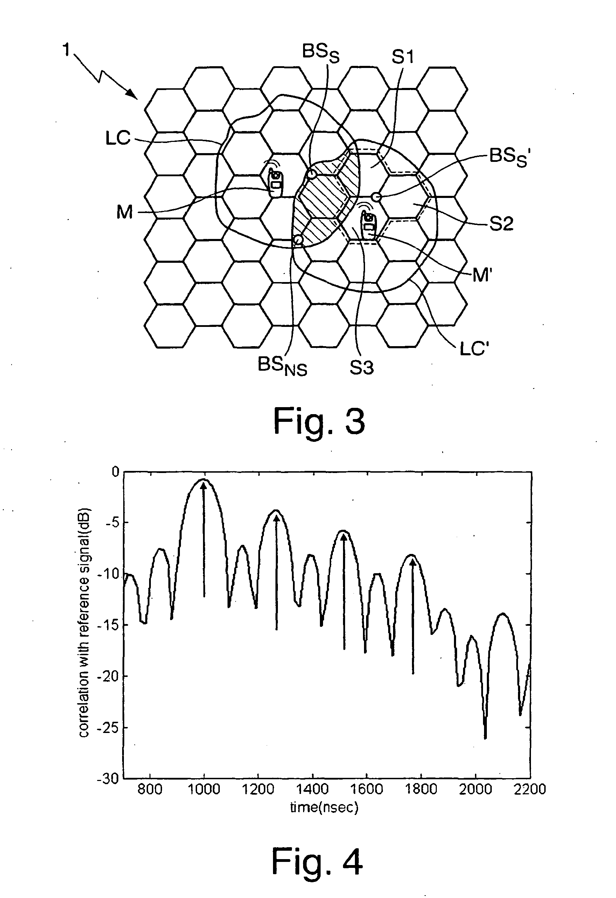

**Fig. 4** shows a plot of the correlation between a (long) Zadoff-Chu sequence and a reference signal (i.e. the same sequence) with three additional multipath components, spaced by 260 nsec, and in the presence of Gaussian white noise. The main peak at 1000 nsec is clearly distinguishable from the multipath components which decay exponentially with a multipath scale factor: exp(-scale factor * multipath index), such that the time of arrival may be unambiguously determined and may be used for the TDOA localization technique, even in a multipath environment. Alternatively, by determining the delay time of the main peak of the auto-correlation function of the Zadoff-Chu sequence, the distance to the mobile terminal may be derived.

Either the derived distance itself or data which allows determining the distance / localization, e.g. the arrival time, is then provided as distance measuring information D from the other base stations BS_{NS} to the serving base station BS_{S}. For this purpose, the serving base station BS_{S} has a communication means 3 which may be identical to the transferring means 7 (e.g. an X2 interface or a core network). Alternatively, a dedicated communication link may be established using protocol messages/Information Elements in order to perform localization related communication between the serving base station BS_{S} and the other base stations BS_{NS} in the localization cluster LC.

The serving base station BS_{S} then uses a localization means 4 for localizing the mobile terminal M based on the distance measuring information D received from the other base stations BS_{NS} of the localization cluster LC, typically using a triangulation algorithm. Of course, for the calculation, the distance between the serving base station BS_{S} and the mobile terminal M may also be taken into account by using the distance measuring signal DMS received in the serving base station BS_{S}, possibly also using other information available in the serving cell (based on pilot signals etc.). The distance of the mobile terminal M to the serving base station BS_{S} and possibly to the other base stations BS_{NS} may be determined in a determining means 8. The determining means 8 may also be used to derive distance information for a distance measuring signal received from a mobile terminal which is not served by the base station BS_{S}. In the latter case, the information about the time slot T for listening to the distance measuring signal is received in a receiving means 9 of the base station BS_{S}. In either case, the location / position of the mobile terminal M can be determined with high precision.

The distance measuring information D may be a time-of-flight or a time of arrival which can be derived from the distance measuring signal DMS. In the latter case, a so-called Time Difference of Arrival (TDOA) triangulation algorithm may be used. This technique uses the time difference between the arrival times of one and the same distance measuring signal at different (listening) base stations. The TDOA technique does not require to determine the time-of-flight of the distance measuring signal DMS, i.e. the point of time when the transmission started. However, the TDOA technique requires at least four base stations to perform the triangulation instead of three when using the time-of-flight technique.

Typically, in the network 1, two or more mobile terminals M are localized during the same time slot / time interval T, such that distinguishing of distance measuring signals DNS emitted from the different mobile terminals M to be localized is required. As indicated above, a code C is used for performing this distinction. Although a code assigned to different mobile terminals served by the same base station BS_{S} may be chosen to be unique, this may not be the case for codes which have been selected by different serving base stations BS_{S}, BS_{S}', each defining its own localization cluster LC, LC', as indicated in **Fig.** 3. Also indicated in Fig. 3 is a directional cell centred about a serving base station BS_{S}', the cell comprising three (hexagonal) sectors S1 to S3, each covering an angle of about 120°.

Supposing that a base station BS_{NS} in an overlapping region of both localization clusters LC, LC' receives information indicating the same listening time or time slot T and the same code C from the two serving base stations BS_{S}, BS_{S}' for distance measuring signals emitted from different mobile stations M, M', the base station BS_{NS} will conclude that there is a code conflict. In this case, the base station BS_{NS} may remain silent, i.e. it may simply ignore the request for listening to the non-unique distance measuring signals. Although this does not lead to as good a performance as when the code conflict would be resolved, the network localization procedure will still work - just with one base station less in the localization cluster for this particular mobile's localization.

Alternatively, for resolving the code conflict, the base station BS_{NS} may inform the serving base stations BS_{S}, BS_{S}' about the code conflict and that the base station BS_{NS} will not be able to measure the distance measuring signal DMS on this particular code C at all, or not very precisely. The serving base stations BS_{S}, BS_{S}' may then consider this information during their later position calculation for the particular mobile terminal M, M'. For example, the serving base stations BS_{S}, BS_{S'} may carry out the localization calculation only based on distance information received from other base stations (in addition to the distance information derived from the distance measuring signal which is received by themselves). Each of the serving base stations BS_{S}, BS_{S'} may also e.g. assign a new code C to this particular mobile terminal M, M' and let this mobile terminal M, M' emit the distance measuring signal again, e.g. at the next localization time slot, hoping that the base station BS_{NS} which previously detected the code conflict can now listen to the new code. For instance, each serving base station BS_{S}, BS_{S'} could simply choose a new random code out of its pool of available codes. It will be appreciated that the serving base stations BS_{S}, BS_{S'} also have a listening functionality, i.e. the serving base stations BS_{S}, BS_{S'} serve their own mobile terminals M, M' and simultaneously listen to distance measuring signals of their own and/or other mobile terminals M', M. In other words, one and the same base station may at the same time act as a serving base station BS_{S} for its own mobile terminal(s) M and as a listening (non-serving) base station BS_{NS} for mobile terminal(s) M' served by another base station BS_{S'}

It will be appreciated that for performing the above approach, the extent of the synchronization between the base stations should be known, as the synchronisation may influence the position calculation and/or its accuracy. The localization technique is advantageously established in networks having time-synchronized base stations, as these are mandatory in LTE advanced, or which allow this feature to be installed, e.g. the current LTE Release 8.

In non-synchronized networks, the principles described herein can still be applied, requiring an additional effort to align the information and the timing, and the possible error ranges have to be considered when performing the calculation of the mobile terminal's position: If the mobile terminals in the network emit a pulse or code at time to and all of the base stations measure the time of reception of the pulse and if all the clocks in the base stations and the mobile terminals are synchronized, then the location of the mobile terminal can be determined if at least three non-collocated base stations receive the signal and measure the arrival time.

In particular, synchronization between the base stations is an important element of any time-of-flight based localization technique. There are several options for synchronizing the base stations: For example, the use of satellite clocks such as those used for GPS or Galileo, or the IEEE 1588 standard. Other options may be used for synchronizing the communication link between the base stations in a localization cluster.

In a wireless network, the path from a mobile terminal to a base station is often not line-of-sight which compromises the time-of-arrival information. The likelihood of having a line-of-sight connection between the mobile terminal and the base station is increased with more base stations in the localization cluster. As a result, increased accuracy in localization may be achieved if more than the minimum number of base stations participates in the localization process. Thus, the serving base station should form a localization cluster that is large enough to enhance the likelihood of an accurate localization, but not so large as to create code reuse problems.

Regarding the problem of preserving and ensuring privacy, there is no personal information needed for the localization technique described above, i.e. no additional information on top of what the serving cell already knows anyway. The serving base station knows it mobile terminal already, other base stations only get asked to listen to a certain code, but these other base stations do not know to which mobile terminal that particular signal-code belongs to. No localization information has to be sent to or used by higher entities in the network because everything is done only in the radio access network in one single base station.

Of course, if an application requests to transmit the determined localization information to a higher layer server, then the position information may leave the radio access network. For example, when the police wants to know from where an emergency call was emitted from, then the serving base station may be ordered to send its internal localization information to a certain higher layer server, and thus the position of this user is no longer invisible.

In summary, a novel technique for determining the position of mobile terminals in a cellular network is provided 1) in a self organizing way, 2) managed by the base stations alone and 3) within only the radio access network. Thus, there is no longer a need for a central entity or central localization server, greatly reducing latency of the localization process. Thus, the approach described herein allows SON network management tasks to benefit from localization aspects.

For this self organized distributed localization technique described above, the information exchange (signalling) between the base stations and/or the mobile terminal will be shortly summarized as follows:
1) The information (signalling message) sent from one ("serving") cell or base station to another ("other") cell or base station to notify that at a particular future point of time or time-slot this "other" cell shall listen to a particular signal with a particular code.
2) The information sent from one serving cell or base station to a mobile terminal to which it has an active connection to order the mobile to
   a) use a particular distance measuring signal sequence with a certain code and
   b) when precisely (at which time-slot) to emit this uplink signal There are, of course, alternatives, like automatic calculation of a code in the mobile terminal and periodic emission of signalling sequences, as indicated above.
3) The information about the received signal, about the determined distance and/or all the other raw information is sent from the signal receiving ("other") cell or base station back to that first ("serving") cell or base station which previously has asked to listen to that particular code sequence.
4) Depending on the application, the first cell (or base station) then may send the calculated position to that entity where this information is needed, e.g. to the mobile terminal or to another entity in the network.

For the purposes described above, dedicated signalling messages may be used.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for localizing mobile terminals (M) in a radio network (1), the method comprising:
emitting, by a mobile terminal (M) to be localized, a distance measuring signal (DMS),
receiving the distance measuring signal (DMS) in a plurality of base stations (BS_{S}, BS_{NS}) forming a localization cluster (LC) which comprises a serving base station (BS_{S}) for the mobile terminal (M) and a plurality of further, non-serving base stations (BS_{NS}),
determining distances from the mobile terminal (M) to the respective base stations (BS_{S}, BS_{NS}) of the localization cluster (LC) based on the received distance measuring signal (DMS), and
in the localization cluster (LC), preferably in the serving base station (BS_{S}), localizing the mobile terminal (M) based on the determined distances,
**characterized in that**
the distance measuring signal (DMS) comprises a code (C) for distinguishing the distance measuring signal (DMS) from distance measuring signals emitted by other mobile terminals (M') to be localized, the method further comprising: in a base station (BS_{NS}), detecting a code conflict when receiving information indicating the same listening time or time slot (T) and the same code (C) from at least two serving base stations (BS_{S}, . BS_{S}').

2. The method according to claim 1, further comprising: transmitting information indicating a time or time slot (T) for the emission of the distance measuring signal (DMS) from the serving base station (BS_{S}) to the mobile terminal (M) to be localized.

3. The method according to claim 1 or 2, further comprising:
transferring information indicating a time or time slot (T) for listening to the distance measuring signal (DMS) of the mobile terminal (M) from the serving base station (BS_{S}) to the other base stations (BS_{NS}) of the localization cluster (LC).

4. The method according to claim 3, wherein the base stations (BS_{S}, BS_{NS}) of the localization cluster (LC) determine at least one of an arrival time, a power level, an angle-of-arrival, and/or a shape of the distance measuring signal (DMS).

5. The method according to claim 1, further comprising: transferring information about the code conflict from the non-serving base station (BS_{NS}) to at least one of the serving base stations (BS_{S}, BS_{S}').

6. The method according to any one of the preceding claims, further comprising: for establishing the localization cluster (LC), selecting, by the serving base station (BS_{S}), other base stations (BS_{NS}) susceptible of receiving the distance measuring signal (DMS) emitted by the mobile terminal (M) to be localized.

7. The method according to any one of the preceding claims, further comprising: transferring distance measuring information (D) derived from the received distance measuring signal (DMS) from the further base stations (BS_{NS}) to the serving base station (BS_{S}).

8. Base station (BS_{S}), comprising:
generating means (2) for generating a localization cluster (LC) by selecting other base stations (BS_{NS}) susceptible of receiving a distance measuring signal (DMS) emitted by a mobile terminal (M) to be localized, the mobile terminal (M) being served by the base station (BS_{S}),
communication means (3) for communicating with the other base stations (BS_{NS}) of the localization cluster (LC) for receiving distance measuring information (D) allowing to determine a distance from the mobile terminal (M) to a respective one of the other base stations (BS_{NS}), and
localization means (4) for localizing the mobile terminal (M) based on the distance measuring information (D), and
transmission means (5) for transmitting information indicating a time or time slot (T) for the emission of the distance measuring signal (DMS) to the mobile terminal (M) to be localized, **characterised in that** it further comprises
code assignment means (6) for assigning a code (C) to the distance measuring signal (DMS) in order to distinguish the distance measuring signal (DMS) from distance measuring signals of other mobile terminals (M') to be localized, the transmission means (5) being adapted to transmit information about the code (C) to the mobile terminal (M), the base station (BS_{S}) being adapted to detect a code conflict when receiving information indicating the same listening time or time slot (T) and the same code (C) from at least two serving base stations (BS_{S}, BS_{S}').

9. Base station according to claim 8, further comprising:
transferring means (7) for transferring information indicating a time or time slot (T) for listening to the distance measuring signal (DMS) of the mobile terminal (M) to the other base stations (BS_{NS}) of the localization cluster (LC).

10. Base station according to any one of claims 8 or 9, further comprising:
determining means (8) for determining a distance to a further mobile terminal (M') not served by the base station (BS_{S}), the determining being based on a distance measuring signal (DMS) received from the further mobile terminal (M').

11. Base station (BS_{S}) according to any one of claims 8 to 10, further comprising:
receiving means (9) for receiving information indicating a time or time slot (T) for listening to a distance measuring signal of a further mobile terminal (M') which is not served by the base station (BS_{S}).

12. Radio network (1), comprising a plurality of base stations (BS_{S}, BS_{S}') according to any one of claims 8 to 11.

## Patentansprüche

1. Verfahren zur Ortung von mobilen Endgeräten (M) in einem Funknetzwerk (1), wobei das Verfahren umfasst:
Ausgeben, durch ein zu ortendes mobiles Endgerät (M), eines Abstandsmesssignals (DMS),
Empfangen des Abstandsmesssignals (DMS) in einer Vielzahl von Basisstationen (BS_{S}, BS_{NS}), die einen Ortungscluster (LC) bilden, welcher eine bedienende Basisstation (BS_{S}) für das mobile Endgerät (M) und eine Vielzahl von weiteren, nicht bedienenden Basisstationen (BS_{NS}) umfasst,
Ermitteln der Abstände zwischen dem mobilen Endgerät (M) und den jeweiligen Basisstationen (BS_{S}, BS_{NS}) des Ortungsclusters (LC) auf Basis des empfangenen Abstandsmesssignals (DMS), und
in dem Ortungscluster (LC), vorzugsweise in der bedienenden Basisstation (BS_{S}), Orten des mobilen Endgeräts (M) auf Basis der ermittelten Abstände,
**dadurch gekennzeichnet, dass**
das Abstandsmesssignal (DMS) einen Code (C) zum Unterscheiden des Abstandsmesssignals (DMS) von von anderen zu ortenden mobilen Endgeräten (M') ausgegebenen Abstandsmesssignalen enthält, wobei das Verfahren weiterhin umfasst: Erkennen, in einer Basisstation (BS_{NS}), eines Code-Konflikts, wenn von mindestens zwei bedienenden Basisstationen (BS_{S}, BS_{S}') Informationen empfangen werden, die dieselbe Abhörzeit oder denselben Zeitschlitz (T) und denselben Code (C) angeben.

2. Verfahren nach Anspruch 1, weiterhin umfassend:
Übertragen von Informationen, welche eine Zeit oder einen Zeitschlitz (T) für die Ausgabe des Abstandsmesssignals (DMS) von der bedienenden Basisstation (BS_{S}) an das zu ortende mobile Endgerät (M) angeben.

3. Verfahren nach Anspruch 1 oder 2, weiterhin umfassend:
Transferieren der Informationen, welche eine Zeit oder einen Zeitschlitz (T) für das Abhören des Abstandsmesssignals (DMS) des mobilen Endgeräts (M) angeben, von der bedienenden Basisstation (BS_{S}) an die anderen Basisstationen (BS_{NS}) des Ortungsclusters (LC).

4. Verfahren nach Anspruch 3, wobei die Basisstationen (BS_{S}, BS_{NS}) des Ortungsclusters (LC) mindestens entweder eine Ankunftszeit, einen Leistungspegel, einen Ankunftswinkel und/oder eine Form des Abstandsmesssignal (DMS) ermitteln.

5. Verfahren nach Anspruch 1, weiterhin umfassend: Transferieren der Informationen über den Code-Konflikt von der nicht bedienenden Basisstation (BS_{NS}) an mindestens eine der bedienenden Basisstationen (BS_{S}, BS_{S}').

6. Verfahren nach einem beliebigen der vorstehenden Ansprüche, weiterhin umfassend: Zum Herstellen des Ortungsclusters (LC), Auswählen, durch die bedienende Basisstation (BS_{S}), von anderen Basisstationen (BS_{NS}), welche geeignet sind, das von den zu ortenden mobilen Endgeräten (M) ausgegebene Abstandsmesssignal (DMS) zu empfangen.

7. Verfahren nach einem beliebigen der vorstehenden Ansprüche, weiterhin umfassend: Transferieren der von dem empfangenen Abstandsmesssignal (DMS) abgeleiteten Abstandsmessinformationen (D) von den weiteren Basisstationen (BS_{NS}) an die bedienende Basisstation (BS_{S}).

8. Basisstation (BS_{S}), umfassend:
Erzeugungsmittel (2) zum Erzeugen eines Ortungsclusters (LC) durch Auswählen anderer Basisstationen (BS_{NS}), welche für den Empfang eines von einem zu ortenden mobilen Endgerät (M) ausgegebenen Abstandsmesssignals (DMS) geeignet sind, wobei das mobile Endgerät (M) von der Basisstation (BS_{S}) bedient wird,
Kommunikationsmittel (3) zum Kommunizieren mit den anderen Basisstationen (BS_{NS}) des Ortungsclusters (LC) für den Empfang von Abstandsmessinformationen (D), welche es ermöglichen, einen Abstand zwischen dem mobilen Endgerät (M) und einer jeweiligen der anderen Basisstationen (BS_{NS}) zu ermitteln, und
Ortungsmittel (4) zum Orten des mobilen Endgerät (M) auf Basis der Abstandsmessinformationen (D), und
Übertragungsmittel (5) zum Übertragen der Informationen, welche eine Zeit oder einen Zeitschlitz (T) für die Ausgabe des Abstandsmesssignals (DMS) an das zu ortende mobile Endgerät (M) angeben, **dadurch gekennzeichnet, dass** sie weiterhin umfasst: Codezuteilungsmittel (6) zum Zuteilen eines Codes (C) an das Abstandsmesssignal (DMS) zum Zweck der Unterscheidung des Abstandsmesssignals (DMS) von Abstandsmesssignalen anderer zu ortender mobiler Endgeräte (M'), wobei die Übertragungsmittel (5) für das Übertragen von Informationen über den Code (C) an das mobile Endgerät (M) ausgelegt sind, wobei die Basisstation (BS_{S}) für das Erkennen eines Code-Konflikts ausgelegt ist, wenn sie von mindestens zwei bedienenden Basisstationen (BS_{S} BS_{S}') Informationen empfängt, welche dieselbe Abhörzeit oder denselben Zeitschlitz (T) und denselben Code (C) angeben.

9. Basisstation nach Anspruch 8, weiterhin umfassend:
Transfermittel (7) zum Transferieren von Informationen, die eine Zeit oder einen Zeitschlitz (T) für das Abhören des Abstandsmesssignals (DMS) des mobilen Endgeräts (M) angeben, an die anderen Basisstationen (BS_{NS}) des Ortungsclusters (LC).

10. Basisstation nach einem beliebigen der Ansprüche 8 oder 9, weiterhin umfassend:
Ermittlungsmittel (8) zum Ermitteln eines Abstands zu einem weiteren mobilen Endgerät (M'), welches nicht von der Basisstation (BS_{S}) bedient wird, wobei das Ermitteln auf einem von dem weiteren mobilen Endgerät (M') empfangenen Abstandsmesssignal (DMS) basiert.

11. Basisstation (BS_{S}) nach einem beliebigen der Ansprüche 8 bis 10, weiterhin umfassend:
Empfangsmittel (9) zum Empfangen von Informationen, welche eine Zeit oder einen Zeitschlitz (T) für das Abhören eines Abstandsmesssignals eines weiteren mobilen Endgeräts (M'), welches nicht von der Basisstation (BS_{S}) bedient wird, angeben.

12. Funknetzwerk (1), umfassend eine Vielzahl von Basisstationen (BS_{S}, BS_{S}') gemäß einem beliebigen der Ansprüche 8 bis 11.

## Revendications

1. Procédé de localisation de terminaux mobiles (M) dans un réseau radio (1), le procédé comprenant :
émission, par un terminal mobile (M) à localiser, d'un signal de mesure de distance (DMS),
réception du signal de mesure de distance (DMS) dans une pluralité de stations de base (BS_{S}, BS_{NS}) formant un groupe de localisation (LC) qui comprend une station de base de rattachement (BS_{S}) pour le terminal mobile (M) et une pluralité d'autres stations de base non en service (BS_{NS}),
détermination des distances entre le terminal mobile (M) et les stations de base respectives (BS_{S}, BS_{NS}) du groupe de localisation (LC) sur la base du signal de mesure de distance reçu (DMS), et
dans le groupe de localisation (LC), de préférence dans la station de base de rattachement (BS_{S}), localisation du terminal mobile (M) sur la base des distances déterminées,
**caractérisé en ce que**
le signal de mesure de distance (DMS) comprend un code (C) pour distinguer le signal de mesure de distance (DMS) de signaux de mesure de distance émis par d'autres terminaux mobiles (M') à localiser, le procédé comprenant en outre : dans une station de base (BS_{NS}), détection d'un conflit de code lors de la réception d'informations indiquant le même temps ou intervalle temporel d'écoute (T) et le même code (C) depuis au moins deux stations de base de rattachement (BS_{S}, BS_{S}').

2. Procédé selon la revendication 1, comprenant en outre : transmission d'informations indiquant un temps ou intervalle temporel (T) pour l'émission du signal de mesure de distance (DMS) depuis la station de base de rattachement (BS_{S}) vers le terminal mobile (M) à localiser.

3. Procédé selon la revendication 1 ou 2, comprenant en outre :
transfert des informations indiquant un temps ou intervalle temporel (T) pour écouter le signal de mesure de distance (DMS) du terminal mobile (M) de la station de base de rattachement (BS_{S}) aux autres stations de base (BS_{NS}) du groupe de localisation (LC).

4. Procédé selon la revendication 3, dans lequel les stations de base (BS_{S}, BS_{NS}) du groupe de localisation (LC) déterminent au moins l'un d'un temps d'arrivée, un niveau de puissance, un angle d'arrivée et/ou une forme du signal de mesure de distance (DMS).

5. Procédé selon la revendication 1, comprenant en outre : transfert des informations relatives au conflit de code de la station de base non en service (BS_{NS}) à au moins l'une des stations de base de rattachement (BS_{S}, BS_{S}').

6. Procédé selon l'une quelconque des revendications précédentes, comprenant en outre : pour établir le groupe de localisation (LC), sélection, par la station de base de rattachement (BS_{S}), d'autres stations de base (BS_{NS}) susceptibles de recevoir le signal de mesure de distance (DMS) émis par le terminal mobile (M) à localiser.

7. Procédé selon l'une quelconque des revendications précédentes, comprenant en outre : transfert des informations de mesure de distance (D) dérivées du signal de mesure de distance (DMS) reçu des autres stations de base (BS_{NS}) à la station de base de rattachement (BS_{S}).

8. Station de base (BS_{S}), comprenant : moyens de génération (2) pour générer un groupe de localisation (LC) en sélectionnant d'autres stations de base (BS_{NS}) susceptibles de recevoir un signal de mesure de distance (DMS) émis par un terminal mobile (M) à localiser, le terminal mobile (M) étant desservi par la station de base (BS_{S}),
moyens de communication (3) pour communiquer avec les autres stations de base (BS_{NS}) du groupe de localisation (LC) pour recevoir des informations de mesure de distance (D) permettant de déterminer une distance entre le terminal mobile (M) et l'une respective des autres stations de base (BS_{NS}), et moyens de localisation (4) pour localiser le terminal mobile (M) sur la base des informations de mesure de distance (D), et
moyens de transmission (5) pour transmettre des informations indiquant un temps ou un intervalle temporel (T) pour l'émission du signal de mesure de distance (DMS) vers le terminal mobile (M) à localiser, **caractérisée en ce qu'**elle comprend en outre des moyens d'attribution de code (6) pour attribuer un code (C) au signal de mesure de distance (DMS) afin de distinguer le signal de mesure de distance (DMS) des signaux de mesure de distance d'autres terminaux mobiles (M') à localiser, les moyens de transmission (5) étant adaptés pour transmettre des informations sur le code (C) au terminal mobile (M), la station de base (BS_{S}) étant adaptée pour détecter un conflit de code lorsqu'elle reçoit des informations indiquant le même temps ou intervalle temporel d'écoute (T) et le même code (C) depuis au moins deux stations de base de rattachement (BS_{S}, BS_{S}').

9. Station de base selon la revendication 8, comprenant en outre :
moyens de transfert (7) pour transférer les informations indiquant un temps ou intervalle temporel (T) pour écouter le signal de mesure de distance (DMS) du terminal mobile (M) aux autres stations de base (BS_{NS}) du groupe de localisation (LC).

10. Station de base selon l'une quelconque des revendications 8 ou 9, comprenant en outre : moyens de détermination (8) pour déterminer une distance avec un autre terminal mobile (M') non desservi par la station de base (BS_{S}), la détermination étant basée sur un signal de mesure de distance (DMS) reçu depuis l'autre terminal mobile (M').

11. Station de base (BS_{S}) selon l'une quelconque des revendications 8 à 10, comprenant en outre :
moyens de réception (9) pour recevoir des informations indiquant un temps ou intervalle temporel (T) pour écouter un signal de mesure de distance d'un autre terminal mobile (M') qui n'est pas desservi par la station de base (BS_{S}).

12. Réseau radio (1) comprenant une pluralité de stations de base (BS_{S}, BS_{S}') selon l'une quelconque des revendications 8 à 11.
